# EUROPEAN PATENT APPLICATION

(11) **EP 4 700 975 A1**
(43) Date of publication of application: **25.02.2026**
(21) Application number: 25163928.2
(22) Date of filing: 14.03.2025
(51) Int. Cl.: H01M 50/579, H01M 50/581, H01M 50/15, H01M 50/586, H01M 50/103, H01M 50/209, H01M 50/367, H01M 50/593, H01M 10/04

(54) **SECONDARY BATTERY AND METHOD FOR MANUFACTURING THE SAME**

(30) Priority: 19.08.2024 KR 20240110807
(71) Applicant: SAMSUNG SDI CO., LTD., Yongin-si, Gyeonggi-do 17084 (KR)
(72) Inventor: LEE, Yein, 17084 Yongin-si (KR); BAEK, Soomin, 17084 Yongin-si (KR); JUNG, Yeonho, 17084 Yongin-si (KR); JEONG, Myungha, 17084 Yongin-si (KR)
(74) Representative: Marks & Clerk LLP

(57) **Abstract**

A secondary battery, including an electrode assembly, a case that accommodates the electrode assembly, a cap plate coupled to an opening of the case, an electrode terminal in the cap plate, a lead tab electrically connecting the electrode assembly to the electrode terminal, and a reinforcing member between the electrode assembly and the case or between the electrode assembly and the cap plate, the reinforcing member including an insulating member, and a high-melting point material inside the insulating member.

## Description

### BACKGROUND

### 1. Field

Embodiments include a secondary battery and a method for manufacturing the same.

### 2. Description of the Related Art

Unlike primary batteries that are not designed to be charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage. The secondary battery includes an electrode assembly consisting of a positive electrode and a negative electrode, a case that accommodates the electrode assembly, a terminal part connected to the electrode assembly, etc.

The above information disclosed in this Background section is for enhancement of understanding of the background of the present disclosure, and therefore, it may contain information that does not constitute related (or prior) art.

### SUMMARY

Embodiments include a secondary battery, the secondary battery including an electrode assembly, a case that accommodates the electrode assembly, a cap plate coupled to an opening of the case, an electrode terminal in the cap plate, a lead tab electrically connecting the electrode assembly to the electrode terminal, and a reinforcing member between the electrode assembly and the case or between the electrode assembly and the cap plate, the reinforcing member including an insulating member, and a high-melting point material inside the insulating member.

The reinforcing member may further include a bottom insulator between the electrode assembly and the cap plate.

The cap plate may include a vent for degassing gas generated therein, and the bottom insulator may be in an area excluding the vent below the cap plate.

The high-melting point material may be in an entire area excluding the vent below the cap plate.

The high-melting point material may be only around the vent in an area excluding the vent below the cap plate.

The reinforcing member may include a side retainer in contact with the lead tab between the electrode assembly and the case.

A thickness of a high-melting point material of the side retainer may be 0.05 mm to 0.2 mm.

A thickness of an insulating member of the side retainer may be 0.05 mm to 0.1 mm.

The reinforcing member may be manufactured by one or more of insert injection, mechanical bonding, and taping so that the insulating member surrounds the high-melting point material.

The high-melting point material may include one or more of a stainless steel (SUS) plate, a copper (Cu) plate, a nickel (Ni) plate, and a ceramic thin plate.

A secondary battery module may include a plurality of the secondary batteries as defined above, resulting in a plurality of secondary batteries interconnected in a horizontal or vertical direction.

Embodiments include a method for manufacturing a secondary battery, the method including preparing an electrode assembly, preparing a case, electrically connecting a lead tab to the electrode assembly, electrically connecting an electrode terminal installed on a cap plate to the lead tab, locating a reinforcing member between the electrode assembly and the case or between the electrode assembly and the cap plate, the reinforcing member including an insulating member and a high-melting point material inside the insulating member, accommodating the electrode assembly in the case, and connecting the cap plate to an opening of the case.

Locating the reinforcing member may include providing the reinforcing member including a bottom insulator between the electrode assembly and the cap plate.

The method for manufacturing a secondary battery may further include forming a vent for degassing gas generated inside the cap plate, wherein providing the reinforcing member including the bottom insulator including providing the bottom insulator in an area excluding the vent below the cap plate.

Providing the bottom insulator may include configuring the bottom insulator so that the high-melting point material is in an entire area excluding the vent below the cap plate.

Providing the bottom insulator may include disposing the high-melting point material only around the vent in an area excluding the vent below the cap plate.

Locating the reinforcing member may include locating the reinforcing member including a side retainer to be in contact with the lead tab between the electrode assembly and the case.

Providing the reinforcing member may include manufacturing the side retainer in which a thickness of the high-melting point material is 0.05 mm to 0.2 mm.

Providing the reinforcing member may include manufacturing the side retainer in which a thickness of the insulating member is 0.05 mm to 0.1 mm.

Locating the reinforcing member may include manufacturing the reinforcing member by one or more of insert injection, mechanical bonding, and taping, the insulating member surrounding the high-melting point material.

The manufactured battery may be a secondary battery as previously defined, or as set out below.

At least some of the above and other features of the invention are set out in the claims.

### BRIEF DESCRIPTION OF THE DRAWINGS

Features will become apparent to those of ordinary skill in the art by describing in detail embodiments with reference to the attached drawings, in which:
FIG. 1A is a top perspective view of a prismatic secondary battery according to one or more embodiments of the present disclosure;
FIG. 1B is a cross-sectional view taken along line I-I in FIG. 1A;
FIG. 2 is a diagram schematically illustrating a secondary battery according to one or more embodiments of the present disclosure;
FIG. 3 is a diagram illustrating a vent hole during thermal runaway of a secondary battery;
FIG. 4 is a diagram schematically illustrating a secondary battery according to one or more embodiments of the present disclosure;
FIG. 5 is a diagram illustrating a vent hole during thermal runaway of a secondary battery according to one or more embodiments of the present disclosure;
FIGS. 6A and 6B are cross-sectional views of a bottom insulator of a secondary battery according to one or more embodiments of the present disclosure;
FIGS. 7A and 7B are diagrams for explaining a method for manufacturing a bottom insulator of a secondary battery according to one or more embodiments of the present disclosure;
FIG. 8 is a side cross-sectional view of applying a bottom insulator of a secondary battery according to one or more embodiments of the present disclosure;
FIGS. 9A and 9B are diagrams for explaining a method for manufacturing a side retainer of a secondary battery according to one or more embodiments of the present disclosure;
FIGS. 10A to 10C are diagrams for explaining a method for manufacturing a secondary battery according to one or more embodiments of the present disclosure;
FIG. 11 is a diagram of a secondary battery module in which a secondary battery according to one or more embodiments of the present disclosure is included;
FIG. 12 is a diagram of a secondary battery pack including the secondary battery module illustrated in FIG. 11 according to one or more embodiments of the present disclosure; and
FIG. 13 is a conceptual diagram of an automobile including the secondary battery pack illustrated in FIG. 12 according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

The present disclosure will be described in detail with reference to the attached drawings.

Examples of secondary batteries include a coin type, a cylindrical type, a prismatic type, and a pouch type. The present disclosure is basically applicable to a prismatic secondary battery. Therefore, the prismatic secondary battery will first be briefly described prior to description of embodiments of the present disclosure.

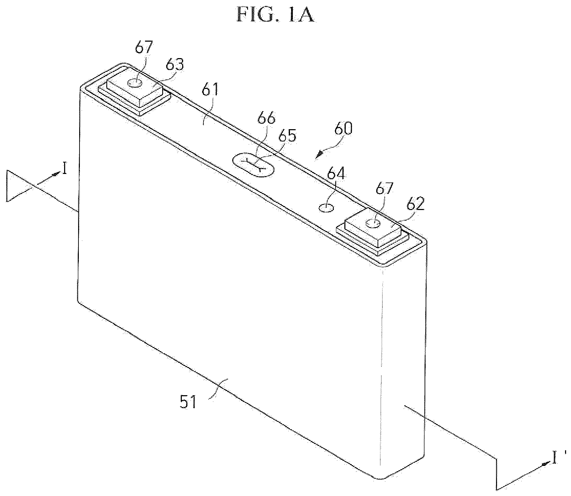

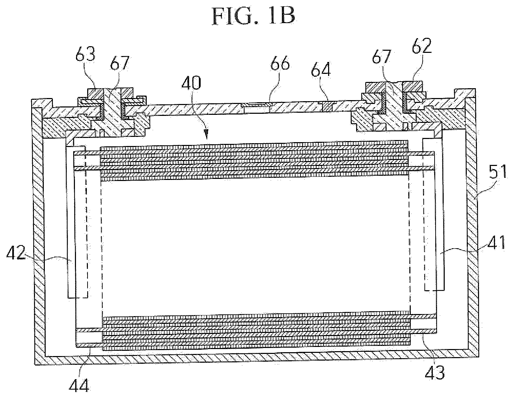

FIG. 1A is a top perspective view of the prismatic secondary battery according to one or more embodiments of the present disclosure. FIG. 1B is a cross-sectional view taken along line I-I' of FIG. 1A.

First, the external appearance of the prismatic secondary battery illustrated in FIG. 1A will be described.

A casing 51 defines an overall appearance of the prismatic secondary battery, and may be made of conductive metal, such as aluminium, aluminium alloy, or nickel-plated steel. In addition, the casing 51 may provide a space for accommodating an electrode assembly therein.

A cap assembly 60 may include a cap plate 61 that covers the opening of the casing 51, and the cap assembly 60 and the cap plate 61 may be made of a conductive material. Here, a first terminal 62 and a second terminal 63 may be electrically connected to respective positive and negative (or negative and positive) electrodes inside the casing, and may be installed to protrude outward through the cap plate 61.

The cap plate 61 may be equipped with an electrolyte injection port 64 formed to install a sealing plug, and a vent 66 formed with a notch 65. The vent 66 is for degassing the secondary battery, i.e., for discharging gas generated inside the secondary battery.

With reference to FIG. 1B, the internal structure of the prismatic secondary battery and the coupling structure with the cap assembly 60 will be described.

As illustrated in FIG. 1B, the prismatic secondary battery may basically include an electrode assembly 40, a first current collector part 41, a first terminal 62, a second current collector part 42, a second terminal 63, and a cap assembly 60.

The electrode assembly 40 may be formed by winding or stacking a laminate of a first electrode plate, a separator, and a second electrode plate, which are in the form of a plate or a film. When the electrode assembly 40 is a wound laminate, it may have a winding axis parallel to the longitudinal direction of the casing. The electrode assembly 40 may be of a stack type rather than a winding type, but the shape of the electrode assembly 40 may be a Z-stack electrode assembly in which a first electrode plate and a second electrode plate are inserted into both sides of a separator bent into a Z-stack. Furthermore, the electrode assembly 40 may consist of one or more electrode assemblies, which are stacked such that their long sides are adjacent to each other and accommodated in the casing, and the number of electrode assemblies may vary. The electrode assembly 40 may have a first electrode plate that acts as a negative electrode and a second electrode plate that acts as a positive electrode, or vice versa.

The first electrode plate may be formed by applying a first electrode active material, such as graphite or carbon, to a first electrode current collector plate made of metal foil, such as copper, copper alloy, nickel, or nickel alloy. The first electrode plate may include a first electrode tab (or first uncoated part) 43, which is a region without application of the first electrode active material. The first electrode tab 43 may act as a current flow passage between the first electrode plate and the first current collector part 41. In some examples, the first electrode tab 43 may be formed by cutting the first electrode plate to protrude to one side in advance when manufacturing the first electrode plate, and may protrude further to one side than the separator without separate cutting.

The second electrode plate may be formed by applying a second electrode active material such as transition metal oxide to a substrate made of metal foil, such as aluminium or aluminium alloy. The second electrode plate may include a second electrode tab (or second uncoated part) 44, which is a region without application of the second electrode active material. The second electrode tab 44 may act as a current flow passage between the second electrode plate and the second current collector part 42. In some examples, the second electrode tab 44 may be formed by cutting the second electrode plate to protrude to the other side in advance when manufacturing the second electrode plate, and may protrude further to the other side than the separator without separate cutting.

In some embodiments, the first electrode tab 43 may be located on the right end side of the electrode assembly 40, and the second electrode tab 44 may be located on the left end side of the electrode assembly 40 (in the orientation shown in FIG. 1B). In other embodiments, the first electrode tab 43 and the second electrode tab 44 may be located on one end side of the electrode assembly 40 in the same direction. Here, the left and the right are represented based on the secondary battery illustrated in FIG. 1 for convenience of explanation, but they may change in position when the secondary battery is rotated left and right or up and down.

The separator functions to prevent a short circuit between the first electrode plate and the second electrode plate while permitting migration of lithium ions therebetween. The separator may be made of, for example, a polyethylene film, a polypropylene film, a polyethylene-polypropylene film, or the like.

The first electrode tab 43 of the first electrode plate and the second electrode tab 44 of the second electrode plate extend from both ends of the electrode assembly 40 as described above, respectively. In some embodiments, the electrode assembly 40 may be accommodated together with an electrolyte in the casing 51.

In the electrode assembly 40, the first current collector part 41 and the second current collector part 42 may be welded and connected to the first electrode tab 43 extending from the first electrode plate and the second electrode tab 44 extending from the second electrode plate, respectively.

The first current collector part 41 and the second current collector part 42 are connected to the first terminal 62 and the second terminal 63, as described with reference to FIG. 1A, through terminal pins 67, respectively. In some embodiments, the terminal pins 67 may each have an outer peripheral surface that is threaded, and may be fastened to the first terminal 62 and the second terminal 63 by screwing. However, the terminal pins 67 may also be coupled to the first terminal 62 and the second terminal 63 by riveting or welding.

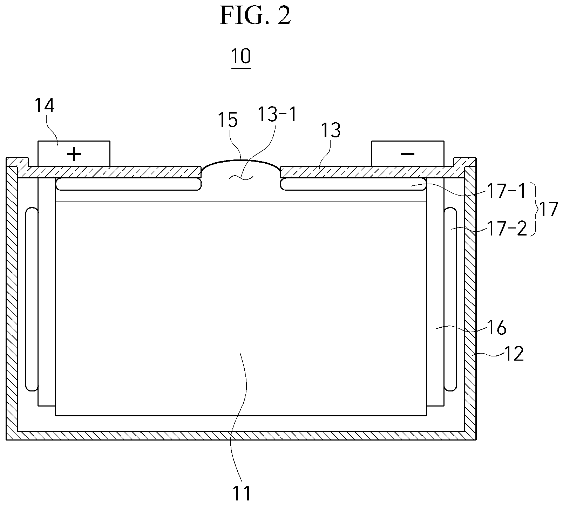

FIG. 2 is a diagram schematically illustrating a secondary battery 10 for comparison purposes.

Referring to FIG. 2, the secondary battery 10 may include an electrode assembly 11, a case 12, a cap plate 13, an electrode terminal 14, a vent 15, a lead tab 16, and a reinforcing injection molded product 17.

The case 12 and the cap plate 13 surrounding the outer side of the secondary battery 10 may be made of aluminium (Al).

The cap plate 13 includes the electrode terminal 14 and the vent 15 for degassing gas generated inside. The cap plate 13 may be formed with a vent hole 13-1 for coupling with the vent 15.

The reinforcing injection molded product 17 may be made of a polymer material such as polypropylene (PP), and serves to alleviate shock or vibration applied to the secondary battery 10 and to insulate parts from each other. The reinforcing injection molded product 17 may include a bottom insulator 17-1 and a side retainer 17-2.

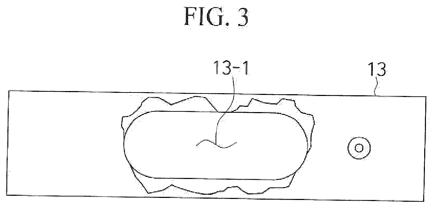

FIG. 3 is a diagram illustrating the vent hole during thermal runaway of the secondary battery of FIG. 2.

Referring to FIG. 3, as described above, the case 12 and the cap plate 13 of the secondary battery 10 are made of aluminium, and the melting point of aluminium is 650°C, and heat generated during thermal runaway is 1000°C. Accordingly, as illustrated in FIG. 3, an area around the vent hole 13-1 of the cap plate 13 is completely melted, and an area where gas and heat are discharged is increased. In such a case, since the bottom insulator 17-1 is also made of a polymer material, it melts together during thermal runaway, and thus does not prevent the area around the vent hole 13-1 from melting.

In addition, the bottom and long sides of the secondary battery 10 are each protected by a cooling plate or a heat insulating material, but in the case of the short side, since there is no structure that can protect against heat, a side rupture phenomenon in which the side of the case 12 melts may occur. In such a case, the side retainer 17-2 is also made of a polymer material and melts together during thermal runaway, thereby failing to prevent the side rupture phenomenon.

As a result, in the secondary battery 10, when an area where gas and heat are discharged during thermal runaway expands or the side rupture phenomenon occurs, an additional event in which thermal runaway is transferred to surrounding secondary battery cells may occur.

In order to solve such problems, development of an outer material made of a material with a high melting point, such as development of stainless steel (SUS) can, is in progress, but it is experiencing difficulties due to problems such as high specific gravity and processability.

The present disclosure has been made to solve such problems of the secondary battery in the related art, and one or more embodiments of the present disclosure is described below with reference to the drawings.

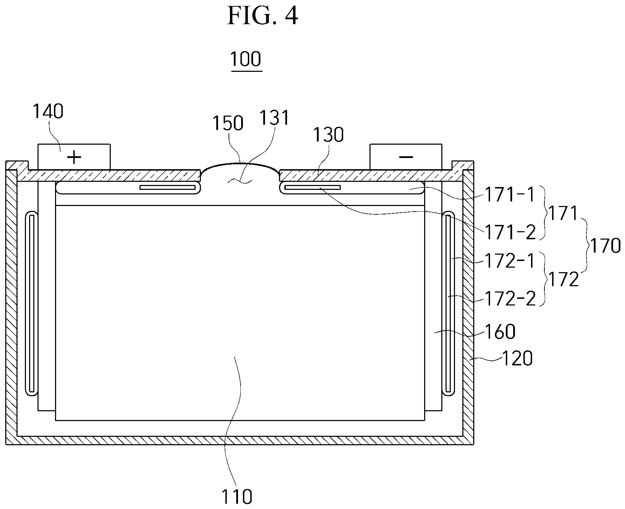

FIG. 4 is a diagram schematically illustrating a secondary battery 100 according to one or more embodiments of the present disclosure.

Referring to FIG. 4, the secondary battery 100 according to one or more embodiments of the present disclosure may include an electrode assembly 110, a case 120 that accommodates the electrode assembly 110, a cap plate 130, electrode terminals 140, a vent 150, a lead tab 160, and a reinforcing member 170.

The cap plate 130 may be coupled to an opening of the case 120. The cap plate 130 may have a substantially rectangular plate shape. The cap plate 130 may be made of the same material as the case 120. For example, the cap plate 130 may have a size corresponding to the inner size of the opening of the case 120. In addition, for example, the cap plate 130 may be coupled to the case 120 by a method such as laser welding. The cap plate 130 may be formed with respective terminal holes and grooves for coupling with the electrode terminals 140, an electrolyte injection port for injecting an electrolyte, a vent hole 131 for coupling with the vent 150, and the like. The vent 150 is for degassing gas generated inside the secondary battery 100 due to rupture when internal pressure increases.

The electrode terminals 140 may be installed on the cap plate 130. In one or more embodiments, the electrode terminal 140 may be coupled to the terminal hole of the cap plate 130. The electrode terminal 140 may be formed by combining a plurality of parts such as a terminal pin and a terminal plate. The electrode terminal 140 may have a positive polarity or a negative polarity.

The lead tab 160 electrically connects the electrode assembly 110 to the electrode terminal 140. The lead tab 160 may be a conductive material having a preset thickness and may have a shape in which a plate shape is bent approximately vertically (in the orientation shown in FIG. 4). The lead tab 160 may be formed by combining a plurality of parts, such as a current collector and a subplate. The lead tab 160 may be electrically connected to the positive or negative electrode tab of the electrode assembly 110 to be electrically connected to the electrode terminals 140.

The reinforcing member 170 is located between the electrode assembly 110 and the case 120 or between the electrode assembly 110 and the cap plate 130, and includes insulating members 171-1 and 172-1 and high-melting point materials 171-2 and 172-2 inside the insulating members 171-1 and 172-1. In one or more embodiments, the high-melting point materials 171-2 and 172-2 may be selected from one or more of a stainless steel (SUS) plate, a copper (Cu) plate, a nickel (Ni) plate, and a ceramic thin plate. The reinforcing member 170 is a composite structure in which a high-melting point material is added to a reinforcing injection molded product made of a polymer material. Accordingly, by adding a high-melting point material to the reinforcing injection molded product located at a vulnerable part during the thermal runaway of a secondary battery, melting of aluminium structures such as the case 120 and the cap plate 130 can be prevented during the thermal runaway of the secondary battery.

In one or more embodiments, the reinforcing member 170 may include a bottom insulator 171 located between the electrode assembly 110 and the cap plate 130. In addition, in one or more embodiments, the reinforcing member 170 may include a side retainer 172 located to be in contact with the lead tab 160 between the electrode assembly 110 and the case 120.

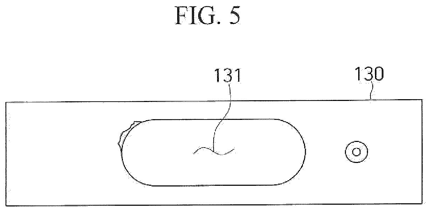

FIG. 5 is a diagram illustrating a vent hole during thermal runaway of the secondary battery according to one or more embodiments of the present disclosure.

Referring to FIG. 4 and FIG. 5, the bottom insulator 171 below the cap plate 130 of the secondary battery 100 according to one or more embodiments of the present disclosure includes the insulating member 171-1 and the high-melting point material 171-2 inside the insulating member 171-1, so that it can prevent an area around the vent hole 131 from melting during thermal runaway. Accordingly, it is possible to prevent a phenomenon that an area around the vent hole 131 melts to increase an area where gas and heat are discharged.

In addition, in the case of the short side of the secondary battery 100 according to one or more embodiments of the present disclosure, since the side retainer 172 that comes into contact with the lead tab 160 between the electrode assembly 110 and the case 120 includes the insulating member 172-1 and the high-melting point material 172-2 inside the insulating member 172-1, it can prevent the side rupture phenomenon in which the side of the case 120 melts without melting during thermal runaway.

Accordingly, in the secondary battery 100 according to one or more embodiments of the present disclosure, the occurrence of a phenomenon in which an area where gas and heat are discharged increases during thermal runaway and a side rupture phenomenon can be prevented, thereby preventing the occurrence of an additional event in which thermal runaway is transferred to surrounding secondary battery cells.

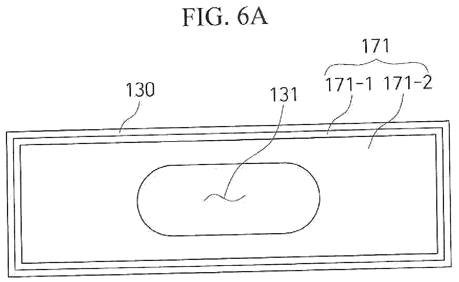

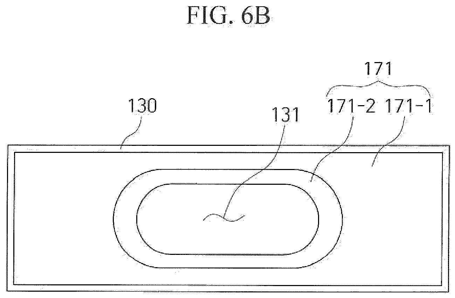

FIGS. 6A and 6B are cross-sectional views of a bottom insulator of the secondary battery according to one or more embodiments of the present disclosure.

Referring to FIGS. 6A and 6B, in one or more embodiments, the bottom insulator 171 may be provided in an area excluding the vent 150 below the cap plate 130. In the case of the bottom insulator 171, since there is room for a gap between the cap plate 130 and the electrode assembly 110, there may be no separate thickness restriction. However, when the thickness of the high-melting point material 171-2 exceeds 1 mm, the weight and manufacturing cost of the secondary battery 100 may increase.

In one or more embodiments, as illustrated in FIG. 6A, the bottom insulator 171 may be configured so that the high-melting point material 171-2 is disposed in an entire area excluding the vent 150, that is, the vent hole 131-1, below the cap plate 130 (see FIGS. 3 and 4).

In another embodiment, as illustrated in FIG. 6B, the bottom insulator 171 may be configured so that the high-melting point material 171-2 is disposed only around the vent 150 in an area excluding the vent 150, that is, the vent hole 131-1, below the cap plate 130 (see FIGS. 3 and 4). In the case of FIG. 6B, the weight and manufacturing cost of the secondary battery 100 can be reduced compared to the case of FIG. 6A while preventing an area around the vent from melting.

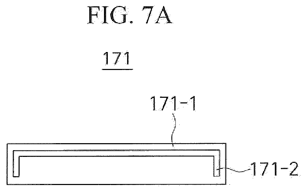

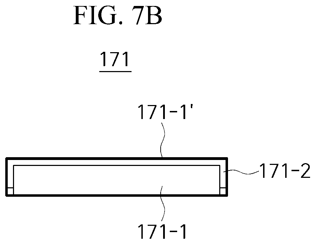

FIGS. 7A and 7B are diagrams for explaining a method for manufacturing a bottom insulator of the secondary battery according to one or more embodiments of the present disclosure.

Referring to FIGS. 7A and 7B, the reinforcing member 170 of the secondary battery 100 according to one or more embodiments of the present disclosure may be manufactured by one or more of insert injection, mechanical bonding, and taping so that the insulating members 171-1 and 172-1 surround the high-melting point materials 171-2 and 172-2, respectively.

As illustrated in FIG. 7A, the bottom insulator 171 may be manufactured by insert-molding the insulating member 171-1 into the high-melting point material 171-2 having a 'C' shape. In such a case, the insulating member 171-1 may be a polymer material such as PP.

As illustrated in FIG. 7B, the bottom insulator 171 may be manufactured by mechanically bonding the insulating member 171-1 into the high-melting point material 171-2 having a 'C' shape, and taping an insulating tape 171-1' around it. In such a case, the insulating tape 171-1' may be a PP tape made of the same insulating material as the insulating member 171-1.

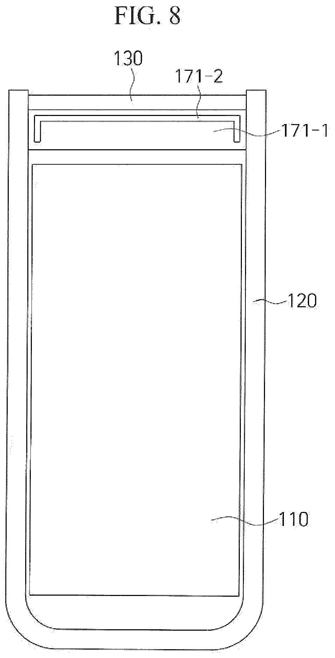

FIG. 8 is a side cross-sectional view of a state in which a bottom insulator of the secondary battery according to one or more embodiments of the present disclosure is applied.

Referring to FIG. 8, it can be confirmed that the bottom insulator 171 manufactured by the method of FIGS. 7A and 7B is located between the electrode assembly 110 and the cap plate 130 of the secondary battery 100. Since the high-melting point material 171-2 has a 'C' shape, it can firmly protect the cap plate 130 from heat and impact.

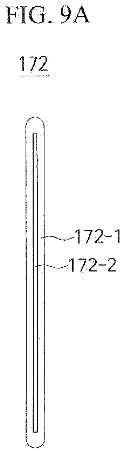

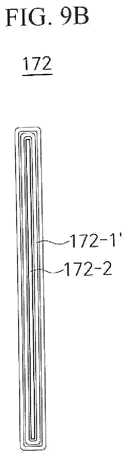

FIGS. 9A and 9B are diagrams for explaining a method for manufacturing a side retainer of the secondary battery according to one or more embodiments of the present disclosure.

Referring to FIGS. 9A and 9B, the side retainer 172 of the secondary battery 100 according to one or more embodiments of the present disclosure may also be manufactured by one or more of insert injection, mechanical bonding, and taping so that the insulating members 172-1 surround the high-melting point material 172-2, similar to the bottom insulator 171.

As illustrated in FIG. 9A, the side retainer 172 may be manufactured by insert-molding the insulating member 172-1 into the high-melting point material 172-2 having an elongated rod shape. In such a case, the insulating member 172-1 may be a polymer material such as PP.

As illustrated in FIG. 9B, the side retainer 172 may be manufactured by taping the insulating tape 172-1' around the high-melting point material 172-2 having an elongated rod shape. In such a case, the insulating tape 172-1' may be a PP tape made of an insulating material.

In one or more embodiments, the thickness of the high-melting point material 172-2 of the side retainer 172 may be 0.05 mm to 0.2 mm. If the thickness of the high-melting point material 172-2 is less than 0.05 mm, it may easily deform due to deterioration of physical properties when exposed to high temperatures and may not serve as a protective layer. In addition, if the thickness of the high-melting point material 172-2 exceeds 0.2 mm, it may penetrate the internal space of the secondary battery 100, thereby reducing the space utilization rate of the secondary battery 100.

In one or more embodiments, the thickness of the insulating member 172-1 of the side retainer 172 may be 0.05 mm to 0.1 mm. If the thickness of the insulating member 172-1 is less than 0.05 mm, the insulation function may be insufficient. When the thickness of the insulating member 172-1 exceeds 0.1 mm, it may penetrate the internal space of the secondary battery 100, thereby reducing the space utilization rate of the secondary battery 100.

In one or more embodiments, the width of the high-melting point material 172-2 of the side retainer 172 may be 90% or more of the total width of the side retainer 172. If the width is less than 90% thereof, the outer edge of a corner of the secondary battery 100 may not be protected.

In one or more embodiments, the width of the side retainer 172 may be 70% or more of the width of the inner short side of the secondary battery 100. In addition, the length of the side retainer 172 may be 70% or more of the height of the secondary battery 100. When the width and length of the side retainer 172 are less than such a standard, the short side of the secondary battery 100 may not be effectively protected during thermal runaway.

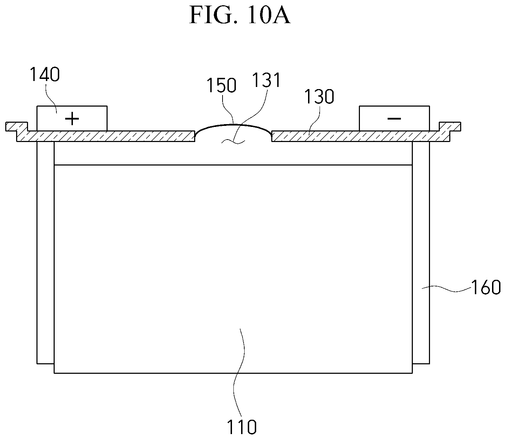

A method for manufacturing the secondary battery according to one or more embodiments of the present disclosure is described below with reference to FIGS. 10A to 10C.

FIGS. 10A to 10C are diagrams for explaining the method for manufacturing the secondary battery according to one or more embodiments of the present disclosure.

Referring to FIG. 10A, when the method for manufacturing the secondary battery according to one or more embodiments of the present disclosure is started, the electrode assembly 110 and the case 120 are first manufactured, and the lead tab 160 is electrically connected to the electrode assembly 110. In one or more embodiments, the electrode assembly 110 and the lead tab 160 may be coupled to each other by a method such as laser welding. Subsequently, the electrode terminal 140 installed on the cap plate 130 is electrically connected to the lead tab 160. In one or more embodiments, the electrode terminal 140 and the lead tab 160 may be coupled to each other by a method such as screw coupling, riveting, or laser welding.

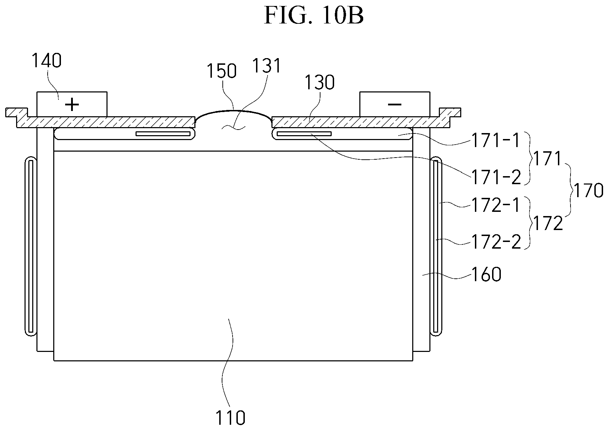

Referring to FIG. 10B, the reinforcing member 170 including the insulating members 171-1 and 172-1 and the high-melting point materials 171-2 and 172-2 inside the insulating member 171-1 and 172-1 is provided between the electrode assembly 110 and the case 120 or between the electrode assembly 110 and the cap plate 130.

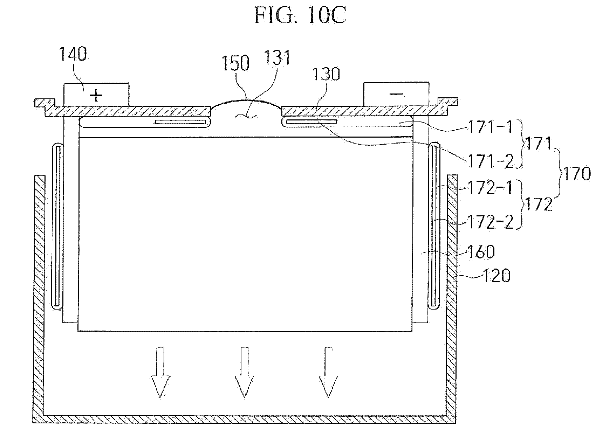

Referring to FIG. 10C, the electrode assembly 110 is accommodated in the case 120, and the cap plate 130 is coupled to the opening of the case 120. In one or more embodiments, the cap plate 130 may be coupled to the case 120 by a method such as laser welding.

According to one or more embodiments of the present disclosure, by providing the reinforcing member 170 including the insulating members 171-1 and 172-1 and the high-melting point materials 171-2 and 172-2 inside the insulating members 171-1 and 172-1, it is possible to prevent an aluminium (Al) structure such as the cap plate 130/the case 120 from melting during thermal runaway of a secondary battery cell.

In addition, according to one or more embodiments of the present disclosure, by adding the high-melting point materials 171-2 and 172-2 to a side retainer/a bottom insulator of an injection molded product, it is possible to prevent a phenomenon that an area around the vent hole 131 of the cap plate 130 melts or the case 120 of the short side of a secondary battery cell melts during thermal runaway of the secondary battery cell, thereby preventing an additional event in which thermal runaway is transferred to surrounding secondary battery cells from occurring.

Hereinafter, materials which may be used in a secondary battery according to one or more embodiments of the present disclosure are described.

A compound (e.g., a lithiated intercalation compound) capable of reversible intercalation and deintercalation of lithium may be used as a positive electrode active material. Specifically, one type or more selected among complex oxides of metal, selected among cobalt, manganese, nickel, and a combination of them, and lithium may be used as the positive electrode active material.

The complex oxide may be lithium transition metal complex oxide. A detailed example of the complex oxide may include lithium nickel-based oxide, lithium cobalt-based oxide, lithium manganese-based oxide, a lithium ferrous phosphate-based compound, cobalt-free nickel-manganese-based oxide, or a combination of them.

For example, a compound that is represented as one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the chemical formula, A may be Ni, Co, Mn, or a combination of them. X may be Al, Ni, Co, Mn, Cr, Fe, Mg, Sr, V, a rare earth element, or a combination of them; D may be O, F, S, P, or a combination of them. G may be Al, Cr, Mn, Fe, Mg, La, Ce, Sr, V, or a combination of them. L¹ may be Mn, Al, or a combination of them.

A positive electrode for a lithium secondary battery may include a current collector and a positive electrode active material layer formed on the current collector. The positive electrode active material layer may include the positive electrode active material, and may further include a binder and/or a conductive material.

Content of the positive electrode active material may be 90 wt.% to 99.5 wt.% with respect to the positive electrode active material layer 100 wt.%. Content of the binder and the conductive material may be 0.5 wt.% to 5 wt.% with respect to the positive electrode active material layer 100 wt.%.

Al may be used as the current collector, but other materials are possible.

A negative electrode active material may include a material capable of reversibly Intercalation/de-intercalation with respect to lithium ions, lithium metal, an alloy of lithium metal, a material capable of doping and dedoping with respect to lithium, or transition metal oxide.

The material capable of reversibly Intercalation/de-intercalation with respect to lithium ions may include a carbon-based negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

A Si-based negative electrode active material or a Sn-based negative electrode active material may be used as the material capable of doping and dedoping with respect to lithium. The Si-based negative electrode active material may be silicon, a silicon-carbon composite, SiOₓ (0<x<2), a Si-based alloy, or a combination of them.

The silicon-carbon composite may be a composite of silicon and amorphous carbon. According to an implementation example, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material, and may further include a binder and/or a conductive material.

For example the negative electrode active material layer may include the negative electrode active material of 90 wt.% to 99 wt.%, the binder of 0.5 wt.% to 5 wt.%, and the conductive material of 0 wt.% to 5 wt.%.

A nonaqueous-based binder, an aqueous-based binder, a dry binder, or a combination of them may be used as the binder. If the aqueous-based binder is used as a binder for the negative electrode, the binder for the negative electrode may further include a cellulose-series compound capable of assigning viscosity.

One selected among nickel foil, stainless steel foil, titanium foil, nickel foam, copper foam, a polymer base on which a conductive metal has been coated, and a combination of them may be used as a current collector for the negative electrode.

An electrolyte for a lithium secondary battery may include a nonaqueous organic solvent and lithium salts.

The nonaqueous organic solvent may play a role as a medium through which ions that are involved in an electrochemical reaction of a battery can move.

The nonaqueous organic solvent may be a carbonate-based, ester-based, ether-based, ketone-based, or alcohol-based solvent, an aprotic solvent, or a combination of them. The carbonate-based, ester-based, ether-based, ketone-based, or alcohol-based solvent, or the aprotic solvent may be used solely, or two types or more of them may be mixed and used as the nonaqueous organic solvent.

Furthermore, if the carbonate-based solvent is used, annular carbonate and chain carbonate may be mixed and used.

A separator may be present between the positive electrode and the negative electrode depending on the type of lithium secondary battery. Polyethylene, polypropylene, and polyvinylidene fluoride, or a multi-layer having two or more layers of them may be used as the separator.

The separator may include a porous base, and a coating layer including an organic matter, an inorganic matter, or a combination of them that is disposed on one or both sides of the porous base.

The organic matter may include a polyvinylidene fluoride-based heavy antibody or (meth)acrylic polymer.

The inorganic matter may include inorganic particles selected among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination of them, but the present disclosure is not limited thereto.

The organic matter and the inorganic matter may have a form in which the organic matter and the inorganic matter have been mixed in one coating layer or a form in which a coating layer including the organic matter and a coating layer including the inorganic matter have been stacked.

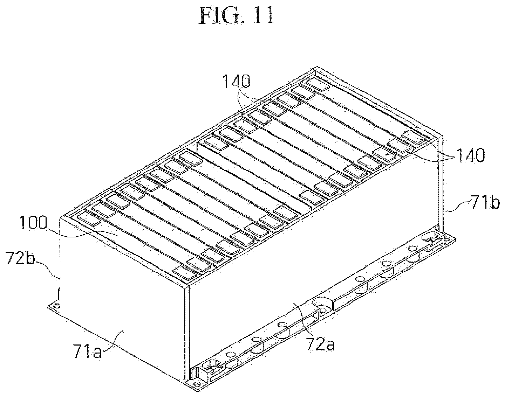

FIG. 11 is a diagram of a secondary battery module in which the secondary batteries illustrated in FIGS. 4 to 9b have been arranged according to one or more embodiments of the present disclosure. The secondary battery module may be manufactured by arranging and connecting multiple secondary battery cells laterally and/or longitudinally as the capacity of a secondary battery for driving an electric vehicle is increased.

Multiple secondary batteries may be arranged in a space that is formed by a pair of end plates 71a and 71b that face each other and a pair of side plates 72a and 72b that face each other. A direction in which the secondary batteries are arranged and the number of secondary batteries may be designed so that desired voltage and current specifications are obtained.

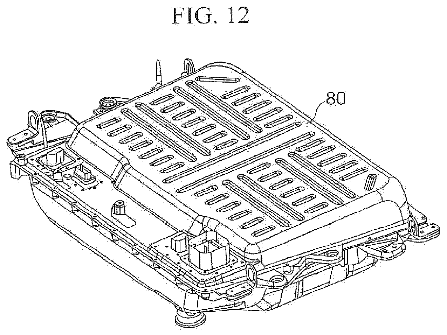

FIG. 12 is a diagram of a secondary battery pack 80 that has been constructed to apply the secondary battery module illustrated in FIG. 11 to an actual product (e.g., a vehicle).

The secondary battery pack may be manufactured by embedding multiple secondary battery modules in a pack housing having a form designed to mount the secondary battery pack on an actual product. The pack housing may include a fastening part that is necessary for the mounting of the secondary battery pack on the product and an electricity withdrawing part. Related elements, such as a bus bar for an electrical connection of secondary batteries, a cooling unit, and an external terminal, are omitted for convenience sake.

The secondary battery pack may be mounted on a vehicle. The vehicle may be an electric vehicle, a hybrid vehicle, or a plug-in hybrid vehicle, for example. The vehicle may include a four-wheel (e.g., all-wheel) or two-wheel drive vehicle.

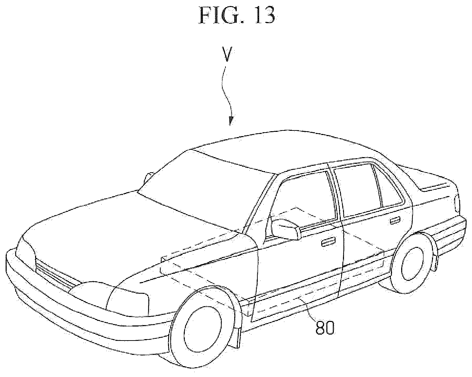

FIG. 13 is a diagram for describing a vehicle including the secondary battery pack illustrated in FIG. 12. FIG. 13 illustrates that the secondary battery pack 80 according to one or more embodiments of the present disclosure has been mounted on a lower part of the vehicle body of a vehicle V The vehicle V may operate by being supplied with power from the secondary battery pack 80 according to one or more embodiments of the present disclosure.

Example embodiments provide a secondary battery including an insulating member and a reinforcing member including a high-melting point material inside the insulating member, and a method for manufacturing the same.

In general, a secondary battery includes an electrode assembly composed of a positive electrode and a negative electrode, a case that accommodates the electrode assembly, a terminal portion connected to the electrode assembly, a lead tab connecting the terminal portion and the electrode assembly, a vent for degassing gas generated inside the case, and the like. When a secondary battery cell experiences thermal runaway, an internal electrode plate ignites and is discharged through the vent together with internal debris and heat. In such a case, there has been a problem in that an additional event in which thermal runaway is transferred to a surrounding secondary battery cell may occur due to a phenomenon in which an area around a vent hole of the cap plate is melted or the case of a short side of a secondary battery cell is melted.

However, the technical problem to be solved by the present disclosure is not limited to the above problem, and other problems not mentioned herein, and aspects and features of the present disclosure that would address such problems, will be clearly understood by those of ordinary skill in the art from the description of the present disclosure.

According to one or more embodiments of the present disclosure, by providing a reinforcing member including an insulating member and a high-melting point material inside the insulating member, it is possible to prevent an aluminium (Al) structure such as a cap plate/a case from melting during thermal runaway of a secondary battery cell.

In addition, according to one or more embodiments of the present disclosure, by adding the high-melting point material to a side retainer/a bottom insulator of an injection molded product in the relate art, it is possible to prevent a phenomenon that an area around a vent hole of a cap plate melts or a case of the short side of a secondary battery cell melts during thermal runaway of the secondary battery cell, thereby preventing an additional event in which thermal runaway is transferred to surrounding secondary battery cells from occurring.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery, comprising:
an electrode assembly;
a case that accommodates the electrode assembly;
a cap plate coupled to an opening of the case;
an electrode terminal in the cap plate;
a lead tab electrically connecting the electrode assembly to the electrode terminal; and
a reinforcing member between the electrode assembly and the case or between the electrode assembly and the cap plate, the reinforcing member comprising:
an insulating member, and
a high-melting point material inside the insulating member.

2. The secondary battery as claimed in claim 1, wherein the reinforcing member further comprises a bottom insulator between the electrode assembly and the cap plate.

3. The secondary battery as claimed in claim 2, wherein:
the cap plate includes a vent for degassing gas generated therein, and
the bottom insulator is in an area excluding the vent below the cap plate.

4. The secondary battery as claimed in claim 3, wherein the high-melting point material is in an entire area excluding the vent below the cap plate.

5. The secondary battery as claimed in claim 3, wherein the high-melting point material is only around the vent in an area excluding the vent below the cap plate.

6. The secondary battery as claimed in any one of the preceding claims, wherein the reinforcing member comprises a side retainer in contact with the lead tab between the electrode assembly and the case.

7. The secondary battery as claimed in claim 6, wherein a thickness of a high-melting point material of the side retainer is 0.05 mm to 0.2 mm, and/or a thickness of an insulating member of the side retainer is 0.05 mm to 0.1 mm.

8. The secondary battery as claimed in any one of the preceding claims, wherein the reinforcing member is manufactured by one or more of insert injection, mechanical bonding, and taping so that the insulating member surrounds the high-melting point material.

9. The secondary battery as claimed in any one of the preceding claims, wherein the high-melting point material includes one or more of a stainless steel (SUS) plate, a copper (Cu) plate, a nickel (Ni) plate, and a ceramic thin plate.

10. A secondary battery module comprising a plurality of the secondary batteries as defined in any one of the preceding claims, resulting in a plurality of secondary batteries interconnected in a horizontal or vertical direction.

11. A method for manufacturing a secondary battery, the method comprising:
preparing an electrode assembly;
preparing a case;
electrically connecting a lead tab to the electrode assembly;
electrically connecting an electrode terminal installed on a cap plate to the lead tab;
locating a reinforcing member between the electrode assembly and the case or between the electrode assembly and the cap plate, the reinforcing member comprising:
an insulating member and a high-melting point material inside the insulating member;
accommodating the electrode assembly in the case; and
connecting the cap plate to an opening of the case.

12. The method for manufacturing a secondary battery as claimed in claim **11,** wherein locating the reinforcing member comprises:
providing the reinforcing member comprising a bottom insulator between the electrode assembly and the cap plate.

13. The method for manufacturing a secondary battery as claimed in claim 12, further comprising:
forming a vent for degassing gas generated inside the cap plate,
wherein providing the reinforcing member comprising the bottom insulator comprises:
providing the bottom insulator in an area excluding the vent below the cap plate, and optionally wherein providing the bottom insulator comprises configuring the bottom insulator so that the high-melting point material is in an entire area excluding the vent below the cap plate, or providing the bottom insulator comprises disposing the high-melting point material only around the vent in an area excluding the vent below the cap plate.

14. The method for manufacturing a secondary battery as claimed in claim **11,** claim 12 or claim 13, wherein locating the reinforcing member comprises:
locating the reinforcing member comprising a side retainer to be in contact with the lead tab between the electrode assembly and the case, and optionally wherein providing the reinforcing member comprises:
manufacturing the side retainer in which a thickness of the high-melting point material is 0.05 mm to 0.2 mm, and/or manufacturing the side retainer in which a thickness of the insulating member is 0.05 mm to 0.1 mm.

15. The method for manufacturing a secondary battery as claimed in any one of claims 11 to 14, wherein locating the reinforcing member comprises:
manufacturing the reinforcing member by one or more of insert injection, mechanical bonding, and taping, the insulating member surrounding the high-melting point material.
